# EUROPÄISCHE PATENTSCHRIFT

(11) **EP 1 062 463 B1**
(45) Veröffentlichungstag und Bekanntmachung des Hinweises auf die Patenterteilung: **16.06.2004**
(21) Anmeldenummer: 99914551.9
(22) Anmeldetag: 09.03.1999
(51) Int. Cl.: F24F 5/00, F24D 11/00, F24F 12/00

(54) **KLIMATISIERUNGSVERFAHREN VON GEBÄUDEN SOWIE KLIMATISIERTES GEBÄUDE**
AIR CONDITIONING METHOD FOR BUILDINGS AND AIR-CONDITIONED BUILDING
METHODE DE CLIMATISATION DE BATIMENTS ET BATIMENTS CLIMATISES

(30) Priorität: 09.03.1998 DE 19809974; 09.03.1999 DE 29804095 U
(43) Veröffentlichungstag der Anmeldung: 27.12.2000
(73) Patentinhaber: Krecké, Edmond Dominique, 6315 Beaufort (LU)
(72) Erfinder: KRECKE, Edmond, D., L-6315 Beaufort (LU)
(74) Vertreter: Herden, Andreas F.
(86) Internationale Anmeldenummer: PCT/EP1999/002108
(87) Internationale Veröffentlichungsnummer: WO 1999/047865

(56) Entgegenhaltungen:
- WO-A-97/10474
- WO-A-97/30316
- US-A- 4 373 573
- US-A- 4 384 609

## Beschreibung

Die Erfindung betrifft ein Klimatisierungsverfahren und ein Gebäude , nach dem Oberbegriff des Anspruchs 1 bzw. 2.

Aus der Patentschrift US-4,384,609 ist ein Erd-Luftvorklimatisierer für Gebäude bekannt, bei welchem Außenluft unter den Boden angesaugt und durch Betonblöcke geleitet wird. Die Betonblöcke weisen ein Paar Öffnungen auf, wobei die Außen- und Innenluft in großer Nähe sind, so dass ein Wärmetauscher bereitgestellt ist.

Ferner ist aus der WO 97/10 474 eine Energieanlage für Gebäude unter Verwendung von Solarabsorbern, Wärmetauschern und Wärmespeichern bekannt geworden, um ein Gebäude bei Bedarf passiv zu erwärmen oder zu kühlen. Neben den Transmissionswärmeverlusten im Winter aus dem Innenbereich des Gebäudes (bzw. den Transmissionswärmegewinnen während des Sommers) gibt es noch Lüftungswärmeverluste während des Winters und unerwünschtes Aufheizen im Sommer. Im Winter bestimmt dieser Lüftungswärmeverlust gemeinsam mit dem Transmissionswärmeverlust den Wärmebedarf eines Gebäudes. Um die Vorgaben des Fraunhofer-Institutes bzw. der Wärmeschutzverordnung (Deutschland) für sogenannte "Null-Energie-Häuser" zu erfüllen, müssen die Lüftungswärmeverluste an einem Gebäude möglichst niedrig gehalten werden. (Null-Energie-Häuser sind per Definition Gebäude mit weniger als 20 KW m²/a Wärmeabgabe.) Ferner ist es wünschenswert, derartig niedrige Wärmeabgabewerte noch zu unterschreiten.

Die Außenwände des in der WO 97/10 474 beschriebenen Gebäudes umfassen eine innere Betonschicht und eine äußere Dämmstoffschicht (neben Putzschichten), und die Wärmeenergie wird der Massivwand zugeführt, die nahezu so warm ist wie der Innenraum. Um die Vorgaben des Frauenhofer-Institutes bzw. der Wärmeschutzverordnung (Deutschland) für sogenannte "Null-Energie Häuser" zu erfüllen, wäre es auch wünschenswert, Niedertemperaturenergie (unterhalb der Raumtemperatur) zu Heizungszwecken einsetzen zu können, um derart auch Wärmespeicher oder Wärmereservoire mit niedrigerer Temperatur als der Raumtemperatur des zu beheizenden Gebäudes nutzen zu können.

Der Erfindung liegt folglich die Aufgabe zugrunde, Klimatisierungsverfahren und ein Gebäude anzugeben, mit welchen der Wärmeverlust von Gebäuden minimiert werden kann. Wünschenswert wäre es auch, Gebäudekonstruktionen anzugeben, um Niedertemperaturenergie (d.h. Wärme mit Temperaturwerten unterhalb der Raumtemperatur) zu Heizungszwecken einspeisen zu können.

Die gestellte Aufgabe wird mit den Verfahrensschritten des Anspruches 1 bzw. der Kombination der Merkmale des Anspruchs 2 gelöst und durch die weiteren Merkmale der abhängigen Ansprüche ausgestaltet und weiterentwickelt.

Mit der Erfindung wird ein Frischluft-Abluft-System geschaffen, das eine Gegenstrom-Wärmetauscheinrichtung bildet. Die in der Abluft vorhandene Wärmeenergie wird weitgehend zurückgewonnen. Das Frischluft-Abluft-System wird außerdem an einen vorzugsweise unterhalb des Gebäudes angelegten Wärmespeicher angeschlossen, um diesem überschüssige Energie abzugeben oder von diesem Wärmeenergie aufzunehmen, um die in das Gebäude eingeleitete Frischluft entsprechend zu temperieren.

Die Verwendung von Wärme mit Temperaturwerten unterhalb der Raumtemperatur des zu beheizenden Gebäudes wird mit den Merkmalen des Anspruches 18 ermöglicht und durch die weiteren Merkmale von dessen abhängigen Ansprüche weiterentwickelt. In besonders vorteilhafter Weise lässt sich die niedrige Temperatur des Wärmeträgermediums während während wärmerer oder Heißperioden, z.B. in den Tropen zur Kühlung nutzen.

Mit der Erfindung wird die Wärmeenergie eines Wärmespeichers mit Niedertemperatur in die Kernzone der Betonaußenwände eingeleitet. In Außenmauermitte hat die Temperatur einen Wert unterhalb der Raumtemperatur, so daß durch Anhebung der Kerntemperatur eine Wärmeverteilung in der Wand verwirklicht werden kann, die zu einer Erhöhung der Innentemperatur führt, obwohl der zugeführte Wärmeenergieträger eine Temperatur hat ("Vorlauftemperatur"), die unterhalb der Raumtemperatur liegt.

Es wird bevorzugt eine symmetrische Wärmedämmung, entgegen der sonst üblichen asymmetrischen Wärmeisolierung (außen liegende.Wärmeisolierung) verwendet, um durch diesen symmetrischen Aufbau eine Klimabarriere, in bevorzugter Weise in Form eines tragenden Mauerwerks zu schaffen.

Dies bedeutet, daß z.B. in einem Vierpersonenhausahalt ein innerer Energiezugewinn von ca. 2500 kWh/anno diese Wärmeenergie sparsamst an den Betonkern, d.h. an die Klimabarriere abgibt. In besonders vorteilhafter Weise hat dieser Betonkern niemals Wintertemperturen, dh. es liegt dessen Temperatur niemals unter 0 C. Im Innenraum eines erfindungsgemäßen Gebäudes herrschen also bereits ohne zusätzliche Beheizung stets mindestens Frühlingstemperaturen. Der Wärmeverlust des Betonkerns zur niedrigen Außentemperatur ist aber im wesentlichen kostenfrei, da dieser durch den Wärmespeicher abgedeckt wird.

Die Erfindung wird anhand der beigefügten Zeichnung und unter Bezugnahme auf bevorzugte Ausführungsformen detaillierter beschrieben.

Es zeigen:
- Fig. 1: einen schematischen Querschnitt durch ein Null-Energie-Haus mit Klimatisierungseinrichtungen gemäß der Erfindung,
- Fig. 2: ein Dreiwegeventil in Winterstellung,
- Fig. 3: das Dreiwegeventil in Sommerstellung
- Fig. 4: eine Rohrwanddurchführung, und
- Fig. 5: eine Vorsatzfassade.
- Fig. 6: einen schematischen Querschnitt durch ein Null-Energie-Haus.

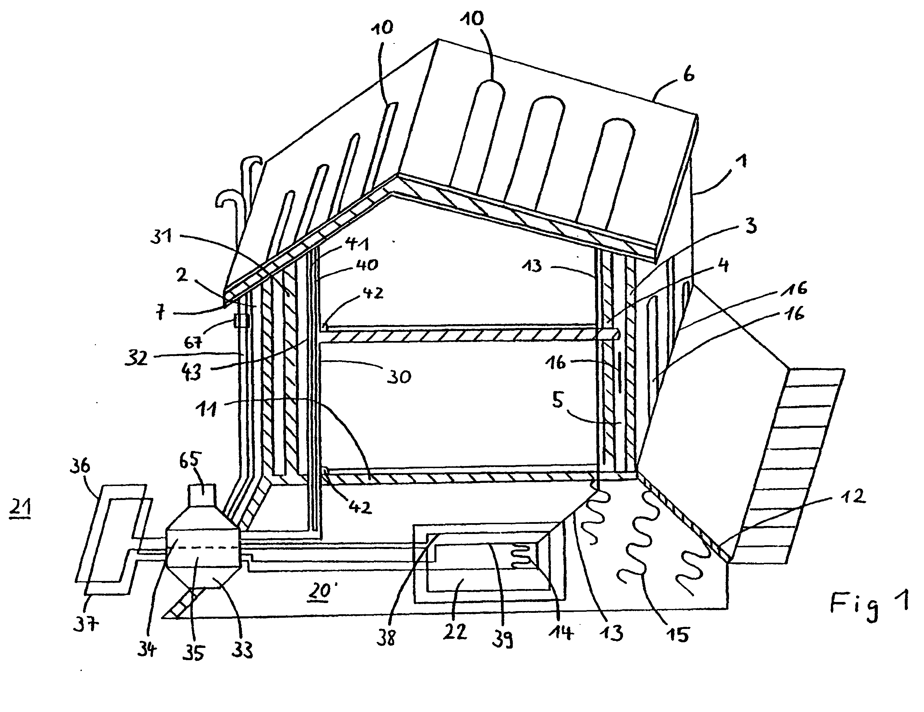

Fig. 1 zeigt ein Haus mit einem Teil der Einrichtungen, wie diese beispielsweise in der WO 97/10 474 beschrieben sind, sowie zusätzliche Klimatisierungseinrichtungen, die in das bestehende Haus systemintegriert sind.

Das Gebäude 1 weist Außenwände 2 auf, die eine äußere Wärmedämmschicht 3, eine innere Wärmedämmschicht 4 und eine Kernzone 5 als Konstruktionsstützschicht, d.h. als tragende Wand insbesondere als tragende Betonwand umfassen.

Das Dach 6 umfaßt eine Tragkonstruktion 7, eine Dämmschicht 8 und eine Dachhaut 9, die aus Dachziegeln oder anderen bekannten Dachmaterialien aufgebaut sein kann und möglichst dunkel sein sollte. Unterhalb der Dachhaut 9 sind bei einer bevorzugten Ausführungsform der Erfindung Wärmeabsorber 10, beispielsweise in Nuten bzw. zwischen der über der Dämmschicht befindenden Konterlattung der Dämmschicht 8 angeordnet.

Es liegt ferner im Rahmen der Erfindung, bei weiteren bevorzugten Ausführungsformen auch ohne die Solar- oder Wärmeabsorber nur den reinen Energieeintrag durch Sonneneinstrahlung des Gebäudes selbst zu nutzen, falls dieses aufgrund der lokalen klimatischen Lage und der bei der Nutzung des Gebäudes innerhalb des Gebäudes abgegebenen Energie möglich ist.

Das Haus besitzt eine Fundamentbodenplatte 11, die hier aus Gründen vereinfachter Darstellung niveaugleich mit dem Gelände gezeichnet ist. Von dieser Bodenplatte 11 schräg nach außen und in den Boden hineinführend ist eine Wärmedämmschicht 12 gezeigt, die unterhalb des Gebäudes 1 einen sogenannten geothermischen Wärmespeicher 20 gegenüber dem umgebenden Erdreich 21 abgrenzt. Hier erfolgt ein Wärmestau der aufsteigenden geothermischen Energie infolge des Gebäudes 1.

Der Wärmespeicher 20 umfaßt einen zentralen Bereich 22 höherer Temperatur, begünstigt durch Zufuhr von Wärme an dieser Stelle. Es werden 20 °C und mehr dauerhaft erreicht. Im Einzelnen sind Fluidfördereinrichtungen umfassend Verbindungsleitungen 13 von dem Solarabsorber 10 zu Wärmetauscherschlangen 14, 15 vorgesehen, die in Abhängigkeit von der Temperatur im Solarabsorber 10 beschickt werden. Bei Ausführungsformen ohne Solarabsorber ist bereits die in den Gebäudewänden aufgenommene Wärmeenergie für den benötigten Energieeintrag ausreichend.

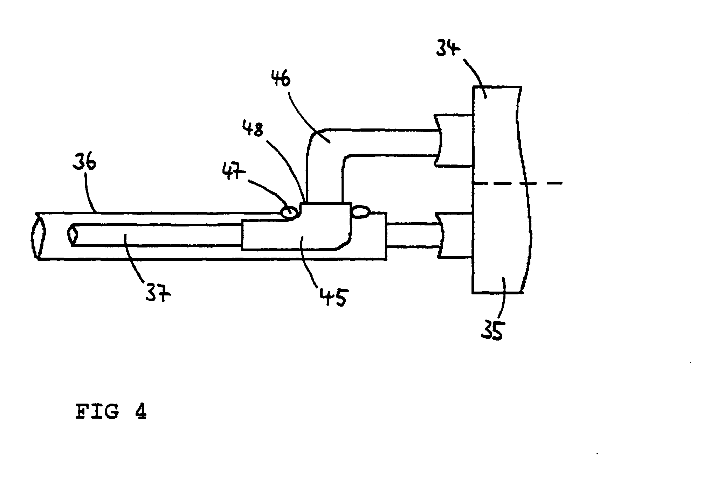

Das Frischluft-Abluft-System 30 umfaßt eine Frischluftleitung 31 und eine Abluftleitung 32, die zu einem Dreiwegeventil 33 führen. Diese Leitungen führen vorteilhaft an der Süd-West Außenwand des Gebäudes gegebenenfalls bis über das Dach, um Frischluft in das Gebäude nachströmen zu lassen, die gegebenenfalls über die Metallfrischluftleitung von der Sonne angewärmt wird, und um die Abluft abzuführen. Man kann diesen Leitungen ein charakteristisches Gepräge verleihen, in der Art eines Warenzeichens für ein klimatisiertes "Null-Energie-Haus". Das Dreiwegeventil 33 besitzt zwei Etagen 34 und 35 pro Absaugbereich (Wohnung, Haus, Gebäudeflügel), wovon die Etage 34 der Verteilung von Frischluft und die Etage 35 der Verteilung von Abluft zugeordnet ist. Bei dieser Zuordnung wird die Abluft über die Leitung 32 abgeführt und die Frischluft über die Leitung 31 der Etage 34 zugeführt. Von diesen Etagen 34, 35 führen Erdrohrleitungen 36 bzw. 37 in das Erdreich 21, wobei diese Erdrohrleitungen 36, 37 über in Fig. 4 dargestellte Rohrwanddurchführungen ineinandergeführt sind, d.h. Rohrschleifen bilden, die vorteilhaft um das Haus über die Wärmedämmschicht 12 herum führen.

Fig. 4 zeigt eine Rohrwanddurchführung, bestehend aus zwei Rohrkrümmern 45 und 46 sowie einer Dichtmanschette 47, welche die Lücke zwischen dem Rohrkrümmer 45 und der Rohrwandqueröffnung 48 abdichtet.

Von den Etagen 34 und 35 führen ferner Wärmespeicherleitungen 38 und 39 in den zentralen Bereich 22 des Wärmespeichers 20 hinein, und zwar werden auch diese Rohrleitungen ineinandergeführt, wie dies hinsichtlich der Rohrleitungen 36, 37 der Fall ist.

Obwohl die Rohrleitungen beispielhaft rund dargestellt sind, ist die Erfindung darauf nicht beschränkt und es können vorteilhaft auch rechteckige, polygonale oder elliptische Querschnitte verwendet werden, gleiches auch für den Mischer, der auch quadratisch, rechteckig mit einer Innenrohr-Außenrohr-Konstruktion realisierbar ist, sodaß anstelle einer Drehbewegung auch eine Schiebe- oder Hubbewegung einsetzbar. ist.

Von den Etagen 34, 35 führen schließlich eine Frischluftraumleitung 40 und eine Abluftsaugleitung 41 ins Innere des Gebäudes um hier, entgegen dem herkömmlichen Überdruck bei Belüftungsanlagen, einen vorteilhaften geregelten Unterdruck zu erreichen. Die Frischluftleitung weist Frischlufteinlässe 42 im Bereich der Fußleisten und die Abluftsaugleitung Abluftsaugöffnungen 43 nahe der Decken auf. Diese Abluftsaugöffnungen sind mit Rückschlagventilen oder - klappen versehen, um im Falle des Lüftens des jeweiligen Raumes das Abluftsystem abzukoppeln. Angepaßt an die Größe, die Art und die Luftbelastung des jeweiligen Raumes sind Sätze von Festblenden vorgesehen, wovon eine passende Größe in die Frischluftabzweigung des jeweiligen Raumes eingesetzt wird, um den zugeführten Strom der Frischluft zu kalibrieren.

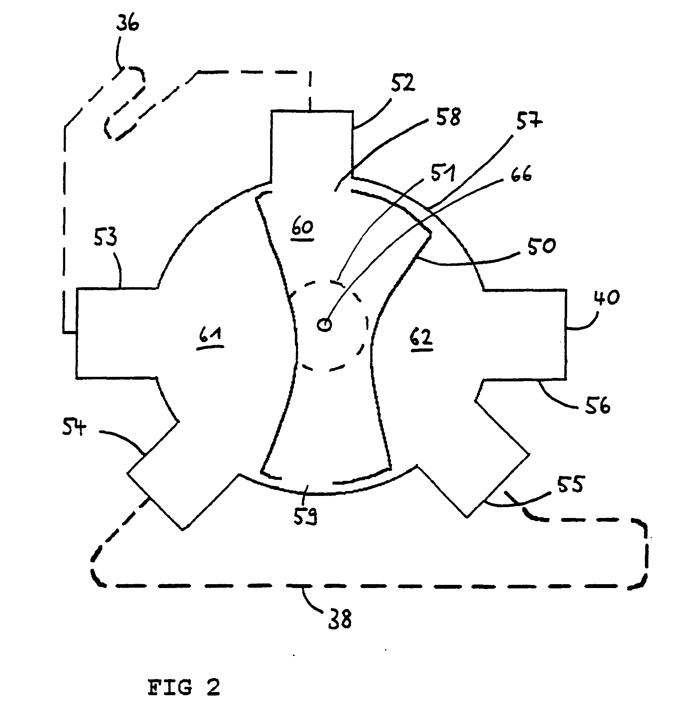

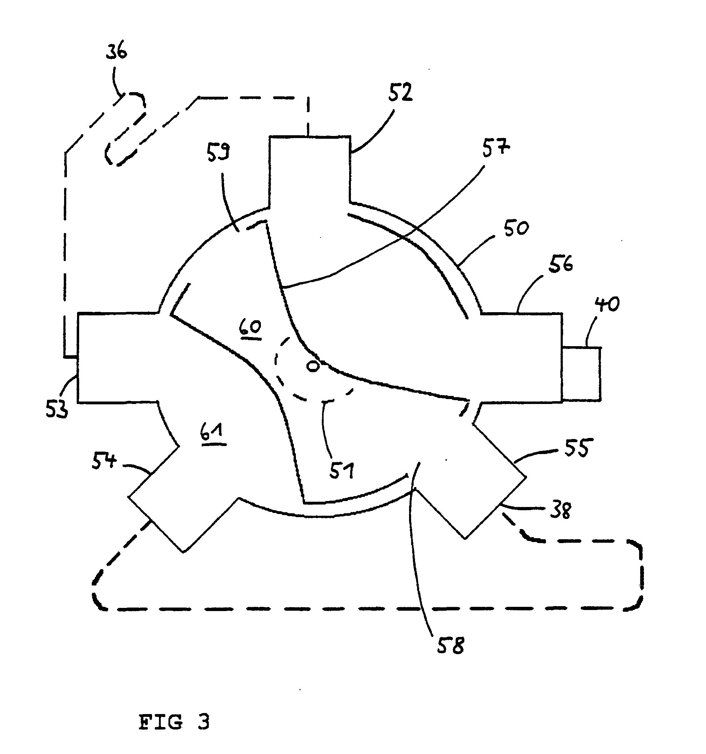

Fig. 2 und 3 stellen eine schematische Darstellung der Etage 34 des Dreiwegeventils 33 dar. Dieses enthält ein zylindrisch-kegelförmiges Mantelgehäuse 50 mit sechs Anschlüssen 51 bis 56, wovon der Anschluß 51 in axialer Richtung verläuft und die Frischluft zuführt, während die übrigen Anschlüsse 52 bis 56 radial verlaufen. Der Anschluß 52 ist über die Rohrleitung 36 mit dem Anschluß 53 verbunden, der Anschluß 54 über die Rohrleitung 38 mit dem Anschluß 55 und der Anschluß 56 steht mit der Leitung 40 in Verbindung. Innerhalb des Gehäuses 50 ist ein Drehschieber 57 mit zwei Blendenöffnungen 58 und 59 vorgesehen, die zur Überdeckung oder Teilüberdeckung mit den Anschlüssen 52 und 55 gebracht werden können. Fig. 2 zeigt eine Winterstellung und Fig. 3 eine Sommerstellung. Der Drehschieber 57 weist einen nach oben offenen Innenraum 60 auf, dem die Frischluft über den Anschluß 51 zugeführt wird. In der Winterstellung der Fig. 2 strömt die Frischluft über die Erdrohrleitungen 36 und den Anschluß 53 in einen abgedeckten Raum 61 des Dreiwegeventils 33 und von dort über den Anschluß 54 und die Warmspeicherleitung 38 und den Anschluß 55 in einen weiteren abgedeckten Raum 62 des Ventils und von dort über den Anschluß 56 in die Frischluftleitung 40 ins Innere des Gebäudes 1. Hinsichtlich der Etage 35 des Dreiwegeventils 33 ist die Strömungsrichtung genau umgekehrt. Die Abluftsaugleitung 41 mündet über den Anschluß 56 in den Raum 62 und die Abluft gelangt von dort über den Anschluß 55, die Leitung 38 und den Anschluß 54 in den Raum 61 und von dort über den Anschluß 53 und die Leitung 37 zum Anschluß 52 und von dort über den Raum 60 der Etage 35 in die Abluftleitung 32. Frischluft und Abluft werden somit in Gegenstrom geführt, wobei möglichst alle Abschnitte 36/37, 38/39 und 40/41 als wenigstens teilweise ineinandergeführte Rohrleitungen ausgebildet sind. Deshalb tritt die Frischluft bei 42 mit einer Temperatur aus, die nahezu der abgesaugten Abluft entspricht.

Der Sommerbetrieb wird anhand der Fig. 3 veranschaulicht. Über den Anschluß 51 wird wiederum Frischluft zugeführt, die im Sommer erhöhte Temperatur aufweisen kann. Diese gelangt über die Blendenöffnung 58 und den Anschluß 55 in die Wärmespeicherleitung 38, über den Anschluß 54 in den Raum 61 und über den Anschluß 63 sowie die Erdrohrleitung 36 zum Anschluß 52 und den Raum 62. Dieser ist über den Anschluß 56 mit der Frischluftleitung 40 verbunden, welche in die zu klimatisierenden Innenräume führt. Von dort erfolgt der Gegenstrom der Abluft über die Leitung 41, die Erdrohrleitung 37 sowie die Wärmespeicherleitung 39 zum Innenraum 60 der Etage 35 des Dreiwegeventils 33 und die Abluftleitung 32 ins Freie.

Der Drehschieber 57 kann in die beiden dargestellten Stellungen geschaltet werden. Demgemäß gibt es einen Stellmotor 65, um über eine Welle 66 die gewünschte Stellung des Drehschiebers 57 einstellen zu können. Die Blendenöffnungen 38 und 39 ermöglichen eine teilweise Überdeckung mit zugeordneten Anschlüssen, wenn man einen Schrittschaftmotor wählt.

In Fig. 1 ist noch schematisch ein Sauggebläse 67 als Absaugeinrichtung eingezeichnet, das hinsichtlich der Leitung 32 wirksam ist und die Abluft nach außen drückt. Dadurch entsteht ein Unterdruck im Gebäude 1, der ständig Außenluft durch Fugen an Fenstern und Türen nach innen nachströmen läßt. Da diese Fremdluft nicht durch das Frischluft-Abluft-System 30 im Winter erwärmt wird, ist man bestrebt, die Türen und Fenster mit möglichst geringen Abdichtungsverlusten auszubilden. Bei Null-Energiehäusern werden nicht öffenbare, rahmenlose Fenster bevorzugt.

Dem Sauggebläse 67 ist ein Stellglied, z.B. Potentiometer, zugeordnet, das im Inneren des Gebäudes 1 angeordnet ist und über eine Steuerleitung die Drehzahl des Gebläses 67 zu regulieren ermöglicht. Derartige Potentiometer- oder können entweder in Bezug auf das ganze Gebäude oder zimmerweise installiert sein. In letzterem Falle kann auch eine der Potentiometereinstellung entsprechende Vergrößerung einer Strömungsaustritts- oder -eintrittsöffnung der Klimatisierungseinrichtung des jeweils betroffenen Zimmers vorgenommen werden. Damit kann der Luftstrom nach den augenblicklichen Bedürfnissen eingestellt werden.

Es liegt ferner ebenfalls im Rahmen der Erfindung, anstelle des Potetiometers elektronische Regeleinrichtungen zu verwenden, welche eine vorgegebene Raumtemperatur durch die strömende Luftmenge regeln.

Zur Unterstützung der Temperaturregelung, d.h. entweder zur schnelleren Erwärmung oder zur Erwärmung bei kaltem Wärmespeicher etwa bei einer Baufertigstellung zum Ende des Jahres hin kann auch in der Zuluftleitung eine elektrisches Heizelement angeordnet sein, wie dieses beispielsweise dem Fachmann von elektrischen Heizlüfter bekannt ist. Eine derartige Zusatzheizeinrichtung kann entweder einmalig pro Gebäude oder zimmerweise vorhanden sein. Solche Zusatzheizungen sind in vielfältiger Auswahl (elektrisch, mit Gas, Öl u.a.) erhältlich. Generell wird jedoch der Bedarf an elektrischer Heizenergie wesentlich geringer sein als bei herkömmlichen Klimatisierungsverfahren.

Im Inneren eines bewohnten Hauses gibt es Wärmequellen (Küchenherd, Lampen, elektrische Geräte u.a.), deren Heizkraft in der Größenordnung der Transmissionswärmeverluste liegen, wenn die Dämmstoffdicke der Schichten 3 und 5 bei 25 Zentimeter liegen und k-Werte von 0,14 W/m²K erreicht werden. Bei der für Mitteleuropa seltenen Außentemperatur von -16 °C und einer Temperaturdifferenz von +40 bzw. +38 bzw. +32 °C zwischen innen und außen errechnet sich eine Kerntemperatur von +4,5 bzw. +3,5 bzw. +0,4 °C wenn Schichtdicken von 12 cm innen und 13 cm außen gewählt werden. Bei Schichtdicken von 10 cm innen und 15 cm außen werden Kerntemperaturen von +7,6 bzw. +6,4 bzw. +2,85 °C erreicht. Aus dem Bereich des Wärmespeichers 20 führen Fluidleitungen 15 in diese Kernschicht 5, die bei 16 schematisch angedeutet sind. Alternativ können die Fluidleitungen auch teilweise oder ganz in einer der vorzugsweise Styropor umfassenden Wärmedämmschicht 3 oder Wärmedämmschicht 4 angeordnet sein.

Das Erdreich hat circa 2 m Tiefe in Mitteleuropa eine Temperatur zwischen +7 und +9 °C. Durch die Anlage des Wärmespeichers 20 wird eine höhere mittlere Temperatur erreicht wegen der Geothermie und weil diesem Wärmespeicher im Sommer Energie zugeführt wird. Demgemäß kann der Kernschicht 5 Wärme aus dem Speicher 20 zugeführt werden, um diese auf +9 °C bis +15 °C aufzuwärmen. Dadurch entsteht in der Außenwand 2 eine Wärme, die sich für das Innere des Gebäudes mit verringertem Heizbedarf bemerkbar macht und die Innentemperatur auf die gewünschten einstellbaren Temperaturen einregelt. In der Klimatisierungsanlage kann eine Kleinstwärmepumpe oder auch das vorstehend beschriebene Heizregister zusätzlich angeordnet werden.

Die in der Kernschicht 5 verlegten Fluidleitungen 16 können im Sommer Wärme über die Schlangen 15 an den Wärmespeicher 20 abgeben. Das gleiche gilt hinsichlich der Solarabsorber 10, die vorzugsweise mit dem Kernbereich 22 des Wärmespeichers 20 in Verbindung stehen, um dort überschüssige Wärme abzuladen.

Die mit der Klimatisierungsanlage mögliche kontrollierte Wohnraumbelüftung sorgt nicht nur für ein behagliches Raumklima, sondern senkt auch den Wärmebedarf des Gebäudes um ein Beträchliches. Dadurch können die Vorgaben des Fraunhofer Institutes der Bundesrepublik Deutschland für Null-Energiehäuser deutlich unterschritten werden.

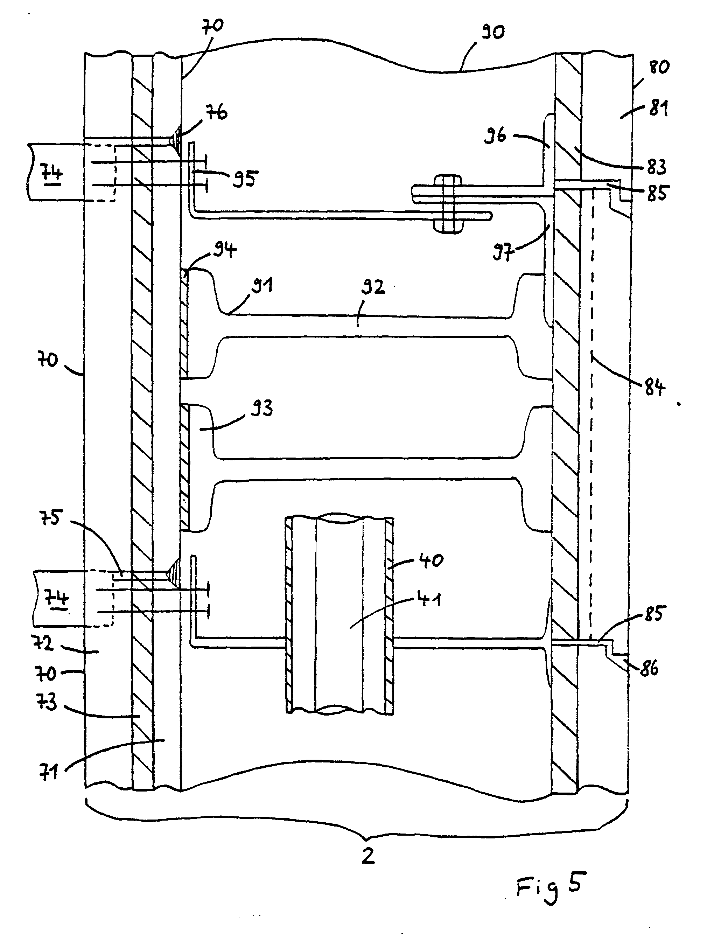

Die Klimatisierung von Gebäuden läßt sich auch bei der Sanierung von Altbauten, insbesondere in Plattenbauweise, realisieren. Eine solche Plattenwand ist bei 70 in Fig. 5 skizziert und enthält eine äußere Betonplatte 71, eine innere Betonplatte 72 sowie eine Dämmschicht 73. Stockwerkdecken sind bei 74 angedeutet. Im Bereich dieser Stockwerke gibt es gewöhnlich Fugen 75 zwischen den einzelnen Stockwerkplatten 70, die hier stumpf aufeinander sitzen. Die Fugen verlaufen waagrecht und sind am Austritt keilförmig erweitert, um eine Abdichtmasse aufzunehmen. Es hat sich abgezeigt, daß die ständige Erwärmung und Abkühlung diese Abdichtmasse nicht auf die Dauer dicht hält, so daß an der Fassade ablaufendes Wasser durch Kapilarwirkung in die Dämmschichtzone 73 gelangt und diese Dämmschichtzone anfeuchtet. Ein weiterer Übelstand entsteht dadurch, daß die Taupunktzone ebenfalls in der Dämmschichtzone 73 liegt, weil die Wärmedämmung der Betonschichten 71 und 72 nicht den physikalischen Anforderungen entsprechen. Die Taupunktunterschreitung führt zur Abscheidung von Wasser in der Dämmzone 73, wodurch deren Wärmedurchlässigkeit zunimmt. Dies bedeutet aber eine weitere Verschiebung der Taupunktzone in Richtung nach Innen des Gebäudes, das heißt auf die Schicht 72 zu, so daß allmählich die gesamte Dämmstoffschicht 73 durchfeuchtet wird. Dies führt nicht nur zu starker Verringerung des Wärmedämmwertes dieser Plattenbauten, sondern auch zur Korrosionsschäden von Verbindungseisen oder dergleichen zwischen den beiden Betonschichten 71 und 72. Dies führt nicht nur zu enormen Korrosionsschäden.

Bei Anwendung des erfindungsgemäßen Klimatisierungsverfahrens lassen sich derartige Altbauten nicht nur modernisieren sondern auch sanieren. Es werden Fassadenplatten 80 im Abstand vor der Fassade des Altgebäudes auf ein Streifenfundament aufgesetzt, das sich um das existierende Altgebäude herumzieht und dem eine Wärmedämmschicht 12 in der Art der Fig. 1 beigeordnet ist. Unter dieser Wärmedämmschicht 12 und dem existierenden Altgebäude wird der Wärmespeicher 20 entstehen, dem in bereits beschriebener Weise durch die Geothermik, bzw. Geothermie, die Solarabsorber sowie der Abluft Wärme zugeführt wird. Die neuen Fassadenplatten 80 enthalten eine äußere Betonschicht 81 und eine innere Wärmedämmschicht 83 ausreichender Dicke, damit die Gesamtaußenwand 2 als stark wärmedämmend einzustufen ist, das heißt Werte von 40 bis unterhalb von 20 KW m²/a aufzuweisen hat. Da die Betonschicht 81 keine Geschoßwände zu tragen braucht, kann sie aus Leichtbeton (Bio-Por-Beton)® hergestellt werden, der beachtliche Wärmedämmwerte aufweist. Dies führt dazu, daß der Taupunkt innerhalb der Betonzone 81 liegt und maximal bis zu der bei 84 eingezeichneten Grenze fortschreiten kann. Die Verlagerung des Taupunkts in Beton, und vor allem porösen Beton, hat den Vorteil, daß Beton eine gewisse Menge Wasser speichern kann, ohne zu schädlichen Auswirkungen zu gelangen. Im übrigen stellt sich über Diffusion ein Gleichgewichtszustand ein.

Um die Dämmstoffschicht 83 vor Eindringen der Feuchtigkeit zu schützen, sind die Fugen zwischen den einzelnen Platten 80 stufig und mit Gefälle nach unten ausgebildet, wobei ein Dichtband in den ebenen Abschnitt eingelegt werden kann und in dem sich erweiternden und abfallenden Teil eine Dichtmasse 86 in guter Verankerung eingeführt werden kann.

Zwischen den Platten 70 des Altbaus und den Platten 80 der neuen Fassade erstreckt sich ein Hinterlüftungsraum 90, durch den die Frischluftleitung 40 und die Absaugleitung 41 geführt werden. Es können natürlich noch weitere Leitungen geführt werden, wie sie in Zusammenhang mit der Fig. 1 besprochen worden sind und weitere Versorgungsleitungen, die nicht im Zusammenhang mit der Klimatisierung stehen brauchen. Die Rohre werden durch die Zwischenräume von hantelförmigen Abstandshaltern 91 hindurchgeführt, die zwar relativ dünne Stege 92 aber großflächige, tellerförmige Verbindungsflächen aufweisen, um einen sicheren Verbund an Nachbarelementen finden zu können. Altbauten, vor allem Plattenbauten des ehemaligen Ostblocks sind gewöhnlich nicht mit der wünschenswerten Präzision hergestellt worden mit der man in der Marktwirtschaft anzutreten hat, weswegen die neuen Fassadenplatten 80 nicht einfach nur parallel zu den bestehenden Gebäuden verlegt werden, sondern laservermessen vertikal und horizontal. Hierzu kann es notwendig sein, Unterlegscheiben an der Außenwand des Altgebäudes anzukleben und daran das hantelförmige Verbindungselement 91 anschließen zu lassen.

Beim Aufbau der neuen Fassade geht man im übrigen zweckmäßig von Stockwerk zu Stockwerk vor. Es werden Winkelelemente 95, 96, 97 verwendet, die sich überlappen und im Überlappungsbereich Langlöcher aufweisen, um den richtigen Abstand zwischen dem Altbau und der neuen Fassade einhalten zu können. Die Winkelelemente 95 werden im Bereich der Geschoßdecken 74 verankert, was gleichzeitig die äußeren Betonplatten 71 des Altbaus zusätzlich sichert. Die Winkel 96 und 97 sind mit Schwerlastdübeln verschraubt.

Die Erfindung ist in weiterer Beziehung ausbaufähig. Man kann das Frischluftzufuhrsystem mit Filtereinrichtungen ausstatten, beispielsweise mit Aktivfilter, Ozonfilter, Insektenfilter, Pollenfilter sowie Bakterien- oder Virenfilter. Die Absaugeinrichtung kann ferner so betrieben werden, wie es den jeweiligen Anforderungen entspricht, das heißt es können Sonden in den zu klimatisierenden Räumen vorgesehen sein, welche eine Zu- und Abluftregelung bewirken. In diesem Zusammenhang kann ein Rauchmelder in der Absaugöffnung vorgesehen sein, der beim Ansprechen wenigstens die Frischluftzufuhrleitung zu den Frischlufteinlässen des Raumes sperrt. Zimmerbrände lodern bekanntlich dann auf, wenn durch Öffnen einer Tür oder eines Fensters ungehinderter Sauerstoffzutritt gegeben ist. Während das Absaugen von Rauch eine wünschenswerte Eigenschaft des Systems darstellt, wird man im Falle von größeren Luftzutrittsquerschnitten in den Raum hinein zunächst die Absaugleistung erhöhen, um einen stärkeren Unterdruck zu erzeugen, da bekanntlich ohne Sauerstoff ein Brand kaum möglich ist. Ferner kann man auch die Absaugleitung sperren, um den Luftaustausch möglichst gering zu halten und dadurch den Brand möglichst zu ersticken.

Das System kann auch als Einbruchsicherungssystem ausgestattet werden. Wenn in einen Raum gewaltsam von außen eingebrochen wird, verändert sich der Unterdruck in diesem Raum wegen der "Falschluftzufuhr". Das Rückschlagventil am Absaugstutzen wird dadurch aktiviert und, wenn in der Ansprechstellung ein Schalter betätigt wird, kann dies zu einer Sicherheitsstelle gemeldet werden. Je nach den Bedürfnissen kann man das System scharfstellen oder im Falle des gewollten Lüftens des Raumes ausschalten.

In Mitteleuropa liegt die Außenluft im Durchschnitt weit unterhalb der Zimmertemperatur, so daß die mit der Frischluft zugeführte absolute Feuchtigkeit in den Innenraum zu relativ trockener Luft führt. In den erfindungsgemäßen Wärmetauscheinrichtungen, insbesondere in Erdkanal-Rohr-in-Rohr-Konstruktionen wird ein Kondensat vermieden, da die Temperaturunterschied zwischen Frischluft und Abluft im Regelfalle außerhalb des Taupunktes liegen. Dies ist nicht der Fall bei herkömmlichen Einweg-Erdkanal-Belüftungsanlagen.

Die Gegenstromwärmetauscheinrichtung kann so ausgestaltet sein, daß ein Teil der mit der Abluft herausgeführten Feuchtigkeit wiedergewonnen wird und der Frischluft zugesetzt wird. Wenn die Abluft beim Durchwandern der Wärmetauscheinrichtung immer kühler wird, wird der Nebelbildungspunkt unterschritten und der sich bildende Nebel kann durch eine geeignete Diffusionseinrichtung in den Frischluftstrom gelangen. Als eine solche Diffusionseinrichtung kann beispielsweise ein drehbarer, zylindrischer Schaumstoffkörper dienen, dessen eine Mantelseite in der Abluft und dessen andere Mantelseite in der Frischluft angeordnet ist. In der Abluftseite beschlägt sich der Schaumstoffkörper mit Feuchtigkeit und nach Drehen in die Frischluftseite verdampft diese Feuchtigkeit. Auch andere Rückfeuchtungseinrichtungen sind verwendbar.
Bedingt durch den Unterdruck wird vermieden, daß Raumfeuchtigkeit durch Eindringen in Bauteile zu nicht gewünschtem Kondensat führt, wodurch Bauschäden vermieden werden.

Fig.'6 zeigt ein Haus einer weiteren erfindungsgemäßen bevorzugten Ausführungsform mit einem Teil der Einrichtungen, wie sie in der WO 97/10 474 beschrieben sind, sowie zusätzliche Klimatisierungseinrichtungen, die in das bestehende Haus systemintegriert sind.

Das Gebäude 1' weist Außenwände 2' auf, die eine äußere Wärmedämmschicht 3', eine innere Wärmedämmschicht 4' und eine Kernzone 5' als tragende Wand, vorzugsweise als Betonwand umfassen. Das Dach 6' umfaßt eine Tragkonstruktion 7', eine Dämmschicht 8' und eine Dachhaut 9', die aus Dachziegeln oder anderen bekannten Dachmaterialien aufgebaut sein kann und möglichst dunkel sein sollte. Unterhalb der Dachhaut 9' sind Wärmeabsorber 10', beispielsweise in Nuten der Dämmschicht 8' oder zwischen der Konterlattung oder zwischen der angeordnet. Das Haus besitzt eine Bodenplatte 11', die hier auch hier aus Gründen vereinfachter Darstellung niveaugleich mit dem Gelände gezeichnet ist. Von dieser Bodenplatte 11' schräg nach außen und in den Boden hineinführend ist eine Wärmedämmschicht 12' gezeigt, die unterhalb des Gebäudes 1' einen sogenannten geothermischen Wärmespeicher 20' gegenüber dem umgebenden Erdreich 21' abgrenzt.

Hier erfolgt Wärmestau der aufsteigenden geothermischen Energie infolge des Gebäudes 1'. Der Wärmespeicher 20' umfaßt einen zentralen Bereich 22' höherer Temperatur, begünstigt durch Zufuhr von Wärme an dieser Stelle. Es werden 20 °C und mehr dauerhaft erreicht. Im Einzelnen sind Fluidfördereinrichtungen einschließlich von Verbindungsleitungen 13' von dem Solarabsorber 10' zu Wärmetauscherschlangen 14', 15' vorgesehen, die in Abhängigkeit von der Temperatur im Solarabsorber 10' beschickt werden.

Das Frischluft-Abluft-System 30' umfaßt eine Frischluftleitung 31' und eine Abluftleitung 32', die zu einem Wegeventil 33' führen. Diese Leitungen führen vorteilhaft an der Süd-West Außenwand des Gebäudes gegebenenfalls bis über das Dach, um Frischluft in das Gebäude nachströmen zu lassen, die gegebenenfalls über die Metallfrischluftleitung von der Sonne angewärmt wird, und um die Abluft abzuführen. Man kann diesen Leitungen ein charakteristisches Gepräge verleihen, in der Art eines Warenzeichens für ein klimatisiertes "Null-Energie-Haus". Das Wegeventil 33' besitzt zwei Etagen 34' und 35' pro Absaugbereich (Wohnung, Haus, Gebäudeflügel), wovon die Etage 34' der Verteilung von Frischluft und die Etage 35' der Verteilung von Abluft zugeordnet ist. Bei dieser Zuordnung wird die Abluft über die Leitung 32' abgeführt und die Frischluft über die Leitung 31' der Etage 34' zugeführt. Von diesen Etagen 34', 35' führen Erdrohrleitungen 36' bzw. 37' in das Erdreich 21', wobei diese Erdrohrleitungen 36', 37' über Rohrwanddurchführungen ineinandergeführt sind, d.h. Rohrschleifen bilden, die vorteilhaft um das Haus über die Wärmedämmschicht 12' herum führen.

Von den Etagen 34' und 35' führen ferner Warmspeicherleitungen 38' und 39' in den zentralen Bereich 22' des Wärmespeichers 20' hinein, und zwar werden auch diese Rohrleitungen ineinandergeführt, wie dies hinsichtlich der Rohrleitungen 36', 37' der Fall ist.

Von den Etagen 34', 35' führen schließlich eine Frischluftraumleitung 40' und eine Abluftsaugleitung 41' ins Innere des Gebäudes. Die Frischluftleitung weist Frischlufteinlässe 42' im Bereich der Fußleisten und die Abluftsaugleitung Abluftsaugöffnungen 43' nahe der Decken auf. Diese Abluftsaugöffnungen sind mit Rückschlagventilen oder -klappen versehen, um im Falle des Lüftens des jeweiligen Raumes das Abluftsystem abzukoppeln. Angepaßt an die Größe, die Art und die Luftbelastung des jeweiligen Raumes sind Sätze von Festblenden vorgesehen, wovon eine passende Größe in die Frischluftabzweigung des jeweiligen Raumes eingesetzt wird, um den zugeführten Strom der Frischluft zu kalibrieren.

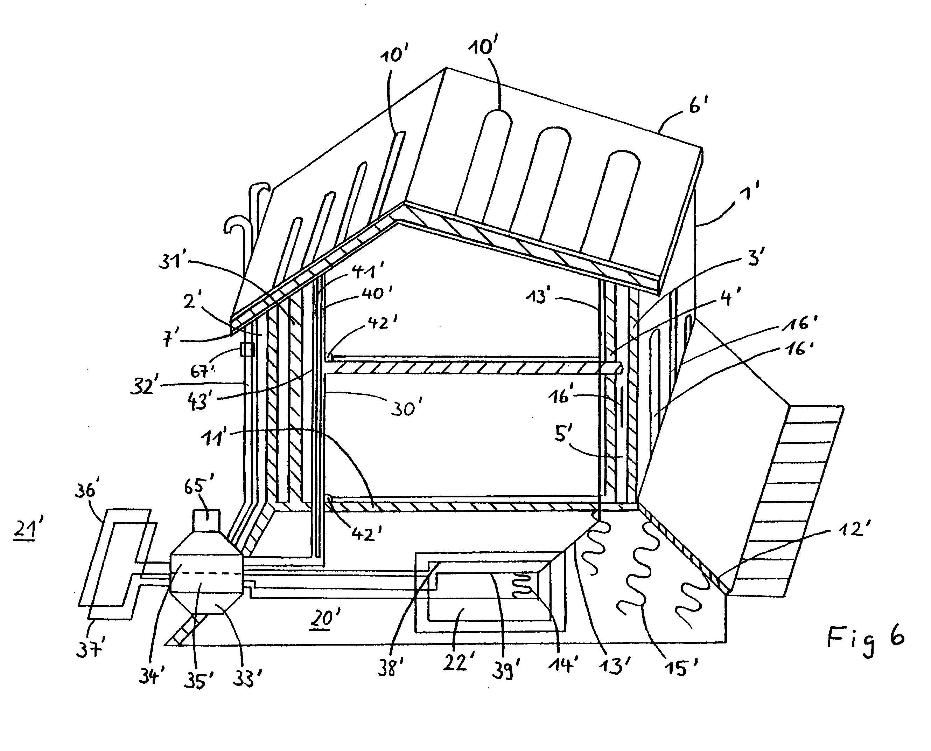

In Fig. 6 ist noch schematisch ein Sauggebläse 67' als Absaugeinrichtung eingezeichnet, das hinsichtlich der Leitung 32' wirksam ist und die Abluft nach außen drückt. Dadurch entsteht ein Unterdruck im Gebäude 1', der ständig Außenluft durch Fugen an Fenstern und Türen nach innen nachströmen läßt. Da diese Fremdluft nicht durch das Frischluft-Abluft-System 30' im Winter erwärmt wird, ist man bestrebt, die Türen und Fenster mit möglichst geringen Abdichtungsverlusten auszubilden. Bei Null-Energiehäusern werden nicht öffenbare, rahmenlose Fenster bevorzugt. Dem Sauggebläse 67' ist ein Stellglied, z.B. Potentiometer, zugeordnet, das im Inneren des Gebäudes 1' angeordnet ist und über eine Steuerleitung die Drehzahl des Gebläses 67' zu regulieren ermöglicht. Damit kann der Luftstrom nach den augenblicklichen Bedürfnissen eingestellt werden.

Aus dem Bereich des Wärmespeichers 20' führen Fluidleitungen 15' in diese Kernschicht 5', die bei 16' schematisch angedeutet sind. Das Erdreich hat in Mitteleuropa in 2 m Tiefe in der Regel eine Temperatur zwischen + 7 °C und + 9 °C. Durch die Anlage des Wärmespeichers 20' wird eine höhere mittlere Temperatur erreicht, wegen der Geothermie und weil diesem Wärmespeicher im Sommer Energie zugeführt wird. Demgemäß kann der Kernschicht 5' Wärme aus dem Speicher 20' zugeführt werden, um diese auf + 9 °C bis + 15 °C aufzuwärmen. Dadurch entsteht in der Außenwand 2' ein Wärmestaueffekt bzw. eine Temperaturverteilung, welche sich für das Innere des Gebäudes mit verringertem Heizbedarf bemerkbar macht und die Innentemperatur im Innern deutlich erhöht.

Die in der Kernschicht 5' verlegten Fluidleitungen 16' können im Sommer Wärme über die Schlangen 15' an den Wärmespeicher 20' abgeben. Das gleiche gilt hinsichtlich der Solarabsorber 10', die vorzugsweise mit dem Kernbereich 22' des Wärmespeichers 20' in Verbindung stehen, um dort überschüssige Wärme abzuladen. Auch bei dieser Ausführungsform kann erfahrungsgemäß in vielen Fällen auf den Solarabsorber 10' verzichtet werden, falls die Dämmung zusammen mit dem restlichen Wärmeeintrags des Gebäudes und der im Innern anfallenden Wärmeabgabe bereits ausreicht, und angenehme Innenraumtemperaturen ermöglicht.

Mit der Erfindung kann Wärmeenergie mit einer Temperatur unterhalb des zu heizenden Raumes nutzbar eingesetzt werden.

## Patentansprüche

1. Klimatisierungsverfahren von Gebäuden mit geringem Wärmeverlust, mit folgenden Schritten:
a) Es wird ein Frischluft-Abluft-System mit Absaugen der Abluft bereitgestellt, die über einen.Wärmespeicher (20) geführt wird;
**dadurch gekennzeichnet, dass**
b) Frischluft und Abluft im Gegenstromprinzip durch Leitungen (36-41) geführt werden, die wenigstens teilweise ineinandergeführt werden, wobei die in der Abluft vorhandene Wärmeenergie weitgehend zurückgewonnen wird.

2. Gebäude mit einer Klimatisierung zur Durführung des Verfahrens nach Anspruch 1, mit folgenden Merkmalen:
i) unter. oder am Gebäude (1) .ist ein Wärmespeicher (20) angelegt, dem bei Heizbedarf des Gebäudes Wärme entzogen und bei Wärmeüberschuß Wärme zuführbar ist;
ii) das Gebäude (1) verfügt über gedämmte Außenwände (2);
iii) das Gebäude (1) ist an Fenstern und Türen mit geringen Leckverlusten ausgebildet, um im Gebäudeinneren einen vorbestimmten Luftunterdruck halten zu können;
iv) ein Frischluft-Abluft-System (30) bildet eine Gegenstrom-Wärmetauscheinrichtung, die ineinandergeführte Rohrleitungen (36/37, 38/39, 40/41) umfaßt, welche einerseits die Frischluft über Raumfrischlufteinlässe (42) zu den zu klimatisierten Räumen und andererseits die Abluft über Abluftsaugöffnungen (43) in das Abluftsystem und von dort nach außen führen.

3. Gebäude nach Anspruch 2, **dadurch gekennzeichnet, daß** ein Teil der Rohrleitungen (38, 39) des Frischluftabluftsystems (30) über den Wärmespeicher (20) geführt ist.

4. Gebäude nach Anspruch 3, **dadurch gekennzeichnet, daß** das Frischluftabluftsystem (30) ein Wegeventil (33) umfaßt, welches Rohrleitungen (36 - 41) der Frischluft und der Abluft so zu schalten ermöglicht, daß im Sommer die warme Frischluft zunächst dem Wärmespeicher (20), dann Erdrohrleitungen (36) und schließlich dem Gebäudeinneren zugeführt wird, während im Winter die kalte Frischluft zunächst den Erdrohrleitungen (36), dann dem geothermischen Speicher (20) und schließlich dem Gebäudeinneren zugeführt wird, wobei die Abluft die entgegengesetzten Wege nimmt.

5. Gebäude nach Anspruch 4, **dadurch gekennzeichnet, daß** das Wegeventil (33) einen Drehschieber (57) in zwei Etagen (34, 35) pro Absaugbereich umfaßt, wobei die Rohrleitungen (36 - 41) der Frischluft und der Abluft außerhalb des Wegeventils (33) über Rohrwanddurchführungen (45 - 48) ineinandergeführt sind.

6. Gebäude nach einem der Ansprüche 2 - 5, **dadurch gekennzeichnet, daß** belüftbare Räume mit absperrbaren Frischlufteinlässen (42) und/oder Abluftsaugöffnungen (43) versehen sind, um den jeweils belüfteten Raum von den Rohrleitungen des Frischluft-Abluft-Systems (30) abzukoppeln.

7. Gebäude nach Anspruch 6, **dadurch gekennzeichnet, daß** die Abluftsaugöffnungen mit Rauchmeldern bestückt sind, welche wenigstens die Absperreinrichtungen der Frischlufteinlässe (42) auslösen.

8. Gebäude nach Anspruch 6, **dadurch gekennzeichnet, daß** die Abluftsaugöffnungen (43) mit Rückschlagventilen oder -klappen versehen sind.

9. Gebäude nach Anspruch 8, **dadurch gekennzeichnet, daß** den Rückschlagventilen oder -klappen Meldeschalter zugeordnet sind, die mit einer Alarmgabeeinrichtung verbunden sind, die scharfgestellt oder ausgeschalten werden kann.

10. Gebäude nach einem der Ansprüche 2 bis 9, **dadurch gekennzeichnet, daß** die Raumfrischlufteinlässe (42) und/oder Abluftsaugöffnungen (43) mit Luftdurchlaß-Bemessungseinrichtungen versehen sind, um die Raumlufterneuerung der Größe, der Art und der Luftbelastung des jeweiligen Raums anpassen zu können.

11. Gebäude nach Anspruch 10, **dadurch gekennzeichnet, daß** gewisse Luftdurchlaß-Bemessungseinrichtungen regelbar sind, um von jeweils zugeordneten Thermostaten oder Luftbelastungsmeßsonden gesteuert zu werden.

12. Gebäude nach einem der Ansprüche 2 bis 11, **dadurch gekennzeichnet, daß** das Frischluftzufuhrsystem mit Filtereinrichtungen versehen ist.

13. Gebäude nach einem der Ansprüche 2 bis 12, **dadurch gekennzeichnet, daß** das Frischluftzufuhrsystem eine Warmlufterzeugungseinrichtung aufweist.

14. Gebäude nach einem der Ansprüche 2 bis 14, **dadurch gekennzeichnet, daß** das Frischluftabluftsystem (30) ein steuerbares Sauggebläse (67) umfaßt, das über ein Stellglied so zu betreiben ist, daß der Förderluftstrom geregelt werden kann.

15. Gebäude nach einem der Ansprüche 2 bis 14, **dadurch gekennzeichnet, daß** das Dach (6) eine Solarabsorberanlage (10) umfaßt, die zur wahlweisen Lieferung von Wärme an den Wärmespeicher (20) ausgebildet ist.

16. Gebäude nach Anspruch 15, **dadurch gekennzeichnet, daß** die Außenwände (2) des Gebäudes (1) jeweils eine äußere und innere Wärmedämmschicht (3, 4) sowie eine Kernzone (5) als Konstruktionsstütze aufweisen, und daß in dieser Kernzone (5) Fluidleitungen (16) als Wärmetauscher einbezogen sind, um zu Zeiten des Heizbedarfs die Temperatur in dieser Kernzone (5) anzuheben und zu Zeiten des Kühlungsbedarfs die Temperatur in dieser Kernzone (5) abzusenken.

17. Gebäude nach einem der Ansprüche 2 bis 15, **dadurch gekennzeichnet, daß** wärmedämmende Fassadenplatten (80) mit Zwischenraum (90) auf ein Streifenfundament vor einem Altbau gesetzt worden sind, daß in dem Zwischenraum (90) Versorgungsleitungen, darunter ineinandergeführte Rohrleitungen (40, 41) des Frischluft-Abluft-Systems geführt sind, und daß der Wärmespeicher (20) unter dem Streifenfundament angelegt ist.

18. Gebäude, insbesondere ein Niedrigenergiehaus, nach einem der vorstehenden Ansprüche 2 bis 17 mit folgenden Merkmalen: vorzugsweise einem an oder unter dem Dach (6') untergebrachter Solarabsorber (10');
einem unterhalb oder seitlich neben dem Gebäude (1') angeordnetem Wärmespeicher (20'); Fluidfördereinrichtungen einschließend Verbindungsleitungen (13') zwischen dem Solarabsorber
(10') und dem Wärmespeicher (20');
Außenwänden (2') des Gebäudes (1') mit einer Außendämmschicht (3'), einer Innendämmschicht (4') und mit einer Kernzone (5'), die vorzugsweise als tragende Betonwand ausgebildet ist;
Fluidleitungen (16'), die in der Kernzone (5') angeordnet und mit dem Solarabsorber (10') und dem Wärmespeicher (20') verbunden sind.

19. Gebäude nach Anspruch 18, **dadurch gekennzeichnet, daß** die Fluidleitungen (16') der Kernzone (5') mit den Außenzonen des Wärmespeichers (20') verbindbar sind, um den Außenwänden (2') im Sommer Wärme zu entziehen und dem Speicher (20') zuzuführen.

20. Gebäude nach Anspruch 18 oder 19, **dadurch gekennzeichnet, daß** die Außendämmschicht (3') etwas dicker als die Innendämmschicht (4') gewählt ist, um Niedertemperaturwärme an optimaler Stelle hinsichtlich der von innen nach außen fallenden Temperaturkennlinie einzuspeisen.

21. Gebäude nach einem der Ansprüche 18 bis 20, **dadurch gekennzeichnet, daß** die Kernzone (5') als Betonschicht mit Einlagen ausgebildet ist und daß die Taupunktzone innerhalb dieser Betonschicht gelegt ist.

## Claims

1. An air-conditioning method for buildings having low heat loss, with the following steps:
a) a fresh air and used air system is provided with suction extraction of the used air, which is fed through a heat storage device (20),
**characterised in that**
b) fresh air and used air are guided on the counter-current principle through conduits (36-41) which are at least partially passed inside one another, the thermal energy present in the used air being extensively recovered.

2. A building with an air-conditioning system for performing the method according to claim 1, with the following features:
i) a heat storage device (20) is installed beneath or at the building (1) and for the building heating requirement heat is withdrawn from said heat storage device and heat is fed to said storage device in the event of surplus heat;
ii) the building (1) has insulated outer walls (2);
iii) the building (1) is constructed with low leakage losses at windows and doors in order to enable a predetermined air negative pressure to be maintained in the building interior;
iv) a fresh air and used air system (30) forms a counter-current heat-exchange device comprising pipelines (36/37, 38/39, 40/41) which are passed inside one another and which on the one hand guide the fresh air through room fresh air inlets (42) to the rooms for air-conditioning and on the other hand guide the used air via used air suction ports (43) into the used air system and then to the exterior.

3. A building according to claim 2, **characterised in that** some of the pipelines (38, 39) of the fresh air and used air system (30) pass through the heat storage device (20).

4. A building according to claim 3, **characterised in that** the fresh air and used air system (30) comprises a multi-way valve (33) which enables pipelines (36- 41) of the fresh air and used air to be so switched that in summer the warm fresh air is first fed to the heat storage device (20) and then underground pipelines (36) and finally to the building interior, while in winter the cold fresh air is first fed to the underground pipelines (36), and then to the geothermal storage device (20) and finally to the building interior, the used air taking the opposite paths.

5. A building according to claim 4, **characterised in that** the multi-way valve (33) comprises a rotary valve (57) in two stages (34, 35) per suction extraction zone, the pipelines (36 - 41) for the fresh air and the used air being passed inside one another outside the multi-way valve (33) through pipe wall bushings (45 - 48).

6. A building according to any one of claims 2 to 5, **characterised in that** rooms adapted to be ventilated are provided with fresh air inlets (42) and/or used air suction ports (43) which can be shut off, so that the respective ventilated room can be disconnected from the pipelines of the fresh air and used air system (30).

7. A building according to claim 6, **characterised in that** the used air suction ports are provided with smoke alarms which trigger at least the shut-off means for the fresh air inlets (42).

8. A building according to claim 6, **characterised in that** the used air suction ports (43) are provided with non-return valves or flaps.

9. A building according to claim 8, **characterised in that** there are associated with the non-return valves or flaps indicator switches connected to an alarm system which can be armed or disconnected.

10. A building according to any one of claims 2 to 9, **characterised in that** the room fresh air inlets (42) and/or used air suction portions (43) are provided with air throughput measuring means to enable the room air renewal to be adapted to the size, nature and air load of the respective room.

11. A building according to claim 10, **characterised in that** certain air throughput measuring means are controllable so as to be controlled by respectively associated thermostats or air load measuring probes.

12. A building according to any one of claims 2 to 11, **characterised in that** the fresh air supply system is provided with filtering means.

13. A building according to any one of claims 2 to 12, **characterised in that** the fresh air supply system comprises a hot air generating means.

14. A building according to any one of claims 2 to 14, **characterised in that** the fresh air and used air system (30) comprises a controllable suction fan (67) so operated via an actuator that the delivered airstream can be regulated.

15. A building according to any one of claims 2 to 14, **characterised in that** the roof (6) comprises a solar absorber installation (10) constructed for the optional supply of heat to the heat storage device (20).

16. A building according to claim 15, **characterised in that** the outer walls (2) of the building (1) each comprise an outer and an inner heat insulating layer (3, 4) and a core zone (5) as a structural support, and **in that** fluid conduits (16) are incorporated as a heat exchanger in said core zone (5) so that the temperature in said core zone (5) can be increased at times of heating requirement and the temperature in said core zone (5) can be reduced at times of cooling requirement.

17. A building according to any one of claims 2 to 15, **characterised in that** heat insulating façade panels (80) with an intermediate space (90) are fitted on a strip foundation on an existing building, supply conduits, including pipelines (40, 41) passed inside one another of the fresh air and used air system are fitted in the intermediate space (90) and **in that** the heat storage device (20) is fitted beneath the strip foundation.

18. A building, more particularly a low-energy house, according to any one of the preceding claims 2 to 17, with the following features:
preferably a solar absorber (10') accommodated on or beneath the roof (6');
a heat storage device (20) disposed beneath or laterally next to the building (1');
fluid transport means including connecting conduits (13') between the solar absorber (10') and the heat storage device (20');
outer walls (2') of the building (1') with an outer insulating layer (3'), an inner insulating layer (4') and with a core zone (5') which is preferably constructed as a load-bearing concrete wall;
fluid conduits (16') disposed in the core zone (5) and connected to the solar absorber (10') and to the heat storage device (20').

19. A building according to claim 18, **characterised in that** the fluid conduits (16') of the core zone (5') are connectable to the outer zones of the heat storage device (20') in order to withdraw heat from the outer walls (2') in the summer and feed it to the storage device (20').

20. A building according to claim 18 or 19, **characterised in that** the outer insulating layer (3') is made somewhat thicker than the inner insulating layer (4') in order to feed low-temperature heat in at an optimal location in respect of the temperature characteristic falling from the interior to the exterior.

21. A building according to any one of claims 18 to 20, **characterised in that** the core zone (5') is constructed as a layer of concrete with inserts and **in that** the dewpoint zone is situated within said concrete layer.

## Revendications

1. Procédé de climatisation de bâtiments à faibles pertes de chaleur, le procédé comprenant les étapes consistant à :
a) fournir un système d'air frais-air usé avec aspiration de l'air usé, qui est acheminé par l'intermédiaire d'un accumulateur thermique (20) ;
**caractérisé en ce que**
b) l'air frais et l'air usé sont acheminés, selon le principe du contre-courant, par des conduites (36 à 41), qui sont du moins en partie logées les unes dans les autres, si bien que l'énergie thermique présente dans l'air usé étant récupérée dans une large mesure.

2. Bâtiment équipé d'une climatisation pour la mise en oeuvre du procédé selon la revendication 1, et présentant les particularités suivantes :
i) un accumulateur thermique (20) est installé au-dessous ou contre le bâtiment (1), de la chaleur en étant extraite dans le cas d'un besoin de chauffage du bâtiment, et de la chaleur pouvant lui être amenée, dans le cas d'un excédent de chaleur ;
ii) le bâtiment (1) dispose de murs extérieurs isolés (2) ;
iii) le bâtiment (1) est conçu à pertes réduites par fuites, au niveau des fenêtres et des portes, afin de pouvoir maintenir, à l'intérieur du bâtiment, une dépression prédéterminée de l'air ;
iv) un système d'air frais / air usé (30) constitue un dispositif d'échange de chaleur à contre-courant, qui comprend des gaines logées les unes dans les autres (36/37, 38/39, 40/41) qui, d'une part, fournissent l'air extérieur, par l'intermédiaire d'orifices locaux d'admission d'air extérieur (42) aux locaux à climatiser et, d'autre part, acheminent l'air usé, par l'intermédiaire d'ouvertures d'aspiration d'air usé (43), vers le système d'air usé et, de là, vers l'extérieur.

3. Bâtiment selon la revendication 2, **caractérisé en ce qu'**une partie des gaines (38, 39) du système d'air frais / air usé (30) passe à travers l'accumulateur de chaleur (20).

4. Bâtiment selon la revendication 3, **caractérisé en ce que** le système d'air frais / air usé (30) comprend un distributeur (33), qui permet de commuter les gaines (36 à 41) pour l'air frais et pour l'air usé de telle sorte que, en été, l'air frais chaud soit d'abord acheminé vers l'accumulateur de chaleur (20), puis vers les gaines souterraines (36) et enfin vers l'intérieur du bâtiment tandis que, en hiver, l'air frais froid est d'abord acheminé vers les gaines souterraines (36), puis vers l'accumulateur géothermique (20) et enfin vers l'intérieur du bâtiment, l'air usé prenant les chemins inverses.

5. Bâtiment selon la revendication 4, **caractérisé en ce que** le distributeur (33) comprend un tiroir rotatif (57) en deux étages (34, 35) par plage d'aspiration, les gaines (36 à 41) pour l'air extérieur et pour l'air usé étant logées les unes dans les autres, à l'extérieur du distributeur (33), par l'intermédiaire de passages de traversée de parois tubulaires (45 à 48).

6. Bâtiment selon l'une des revendications 2 à 5, **caractérisé en ce que** des locaux propres à être ventilés sont pourvus d'orifices d'admission d'air extérieur (42) qui peuvent être fermés et/ou d'ouvertures d'aspiration d'air usé (43) qui peuvent également être fermées, afin que le local chaque fois ventilé soit désolidarisé des gaines du système d'air extérieur / d'air usé (30).

7. Bâtiment selon la revendication 6, **caractérisé en ce que** les ouvertures d'aspiration d'air usé sont pourvues de détecteurs de fumées, qui déclenchent au moins les dispositifs de fermeture des orifices d'admission d'air extérieur (42).

8. Bâtiment selon la revendication 6, **caractérisé en ce que** les ouvertures d'aspiration d'air usé (43) sont pourvues de soupapes ou de clapets de non-retour.

9. Bâtiment selon la revendication 8, **caractérisé en ce que** des interrupteurs d'alarme sont associés aux soupapes ou clapets de non-retour, et **en ce qu'**ils sont reliés à un dispositif d'émission d'alarme, qui peut être mis en position de vigilance ou en position d'arrêt.

10. Bâtiment selon l'une des revendications 2 à 9, **caractérisé en ce que** les orifices locaux d'admission d'air extérieur (42) et/ou les ouvertures d'aspiration d'air usé (43) sont pourvus de dispositifs de détermination de passage d'air, afin de pouvoir adapter le renouvellement de l'air dans le local aux dimensions, au type et à la charge d'air du local chaque fois concerné.

11. Bâtiment selon la revendication 10, **caractérisé en ce que** certains dispositifs de détermination de passage d'air sont réglables, afin de pouvoir être commandés par des thermostats ou par des sondes de mesure de charge d'air, chaque fois associés.

12. Bâtiment selon l'une des revendications 2 à 11, **caractérisé en ce que** le système d'amenée d'air extérieur est pourvu de dispositifs filtrants.

13. Bâtiment selon l'une des revendications 2 à 12, **caractérisé en ce que** le système d'amenée d'air extérieur présente un dispositif de production d'air chaud.

14. Bâtiment selon l'une des revendications 2 à 14, **caractérisé en ce que** le système d'air extérieur / d'air usé (30) comprend un ventilateur aspirant (67) propre à être commandé, et qui est actionné par l'intermédiaire d'un organe de réglage de manière à pouvoir régler le débit du flux d'air.

15. Bâtiment selon l'une des revendications 2 à 14, **caractérisé en ce que** le toit (6) comporte une installation d'absorption solaire (10), qui est conçue pour fournir, au choix, de la chaleur à l'accumulateur de chaleur (20).

16. Bâtiment selon la revendication 15, **caractérisé en ce que** les murs extérieurs (2) du bâtiment (1) présentent chacun une couche extérieure et une couche intérieure d'isolation thermique (3, 4), ainsi qu'une zone centrale (5), en tant que supports de la construction, et **en ce que** des conduites de fluide (16) sont logées en tant qu'échangeurs de chaleur dans cette zone centrale (5) afin de pouvoir, lors de besoins en chauffage, augmenter la température dans cette zone centrale intermédiaire (5) et, lors de besoins en refroidissement, abaisser la température dans cette zone centrale intermédiaire (5).

17. Bâtiment selon l'une des revendications 2 à 15, caractérisé en ce des plaques de revêtement (80) d'isolation thermique pour façades ont été posées, avec un espace intermédiaire (90), sur une semelle filante contre une construction ancienne, en ce que des conduites d'alimentation sont placées dans l'espace intermédiaire (90) et, parmi elles, les gaines (40, 41) logées l'une dans l'autre du système d'air extérieur / d'air usé, et en ce que l'accumulateur de chaleur (20) est installé au-dessous de la semelle filante.

18. Bâtiment, notamment maison à économies d'énergie, selon l'une des revendications précédentes 2 à 17, comportant les particularités suivantes :
de préférence, une installation d'absorption solaire (10'), logée contre le toit (6') ou au-dessous de celui-ci ;
un accumulateur de chaleur (20'), placé au-dessous du bâtiment (1') ou à côté de celui-ci ;
des dispositifs d'acheminement de fluide, comprenant des conduites de liaison (13') entre l'installation d'absorption solaire (10') et l'accumulateur de chaleur (20') ;
des murs extérieurs (2') du bâtiment (1') comportant une couche isolante extérieure (3'), une couche isolante intérieure (4'), ainsi qu'une zone centrale (5') qui est, de préférence, réalisée en tant que mur porteur en béton ;
des conduites de fluide (16'), qui sont disposées dans la zone centrale (5') et qui sont reliées à l'installation d'absorption solaire (10') et à l'accumulateur de chaleur (20').

19. Bâtiment selon la revendication 18, **caractérisé en ce que** les conduites de fluide (16') de la zone centrale (5') peuvent être reliées aux zones extérieures de l'accumulateur de chaleur (20') afin de pouvoir, en été, extraire de la chaleur des murs extérieurs (2') et l'acheminer vers l'accumulateur (20').

20. Bâtiment selon la revendication 18 ou 19, **caractérisé en ce que** la couche isolante extérieure (3') est choisie un peu plus épaisse que la couche isolante intérieure (4'), afin de pouvoir injecter de la chaleur à basse température à un emplacement optimal eu égard à la courbe caractéristique de température qui baisse depuis l'intérieur vers l'extérieur.

21. Bâtiment selon l'une des revendications 18 à 20, **caractérisé en ce que** la zone centrale (5') est réalisée en tant que couche de béton avec des insertions, et **en ce que** la zone du point de condensation est située à l'intérieur de cette couche de béton.
